Europäisches Patentamt

European Patent Office

Office européen des brevets

(11) Publication number: **0 350 029**

**A2**

## EUROPEAN PATENT APPLICATION

(21) Application number: 89112358.0

(51) Int. Cl.⁴: **B29D 11/00 , G02B 1/04**

(22) Date of filing: 06.07.89

| | |
|---|---|
| The application is published incomplete as filed (Article 93 (2) EPC). The point in the description or the claim(s) at which the omission obviously occurs has been left blank. | (71) Applicant: **CESKOSLOVENSKA AKADEMIE VED** Narodni 3 Praha 1(CS) |
| A request for addition of the drawings has been filed pursuant to Rule 88 EPC. A decision on the request will be taken during the proceedings before the Examining Division (Guidelines for Examination in the EPO, A-V, 2.2). | (72) Inventor: **Wichterle, Otto** Na Andelce 27 Praha(CS) Inventor: **Michalek, Jiri** 5. kvêtna 31 Praha(CS) Inventor: **Vacik, Jiri** Mechenická 18 Praha(CS) |
| (30) Priority: **08.07.88 CS 4955/88** | |
| (43) Date of publication of application: **10.01.90 Bulletin 90/02** | |
| (84) Designated Contracting States: **CH DE FR GB IT LI** | (74) Representative: **Patentanwälte Beetz sen. - Beetz jun. Timpe - Siegfried - Schmitt-Fumian- Mayr Steinsdorfstrasse 10 D-8000 München 22(DE)** |

(54) **Biconvex polymer lenses and their production and use.**

(57) The invention relates to biconvex lenses made from synthetic polymer which have the shape of a drop of a lighter liquid freely resisting on the surface of a heavier liquid immiscible with the lighter liquid, while the surface tension of the heavier liquid saturated with the lighter liquid in air is smaller than the sum of the surface tension of the lighter liquid saturated with the heavier liquid in air and the surface tension at the interface of both liquids being in mutual equilibrium.

The lenses are produced in such a way, that a drop of a polymerizable lighter liquid comprising one or more mono-and/or multifunctional monomers and a polymerization catalyst, and eventually an inert diluent, is applied on the surface of a heavier liquid, and then the monomers of the polymerizable lighter liquid are polymerized.

## Biconvex polymer lenses and their production and use

The invention relates to biconvex lenses made from synthetic three-dimensional polymers, designated above all for intraocular applications, and to a method for producing the lenses.

Turning, grinding and polishing are common methods used in making optical lenses which are completely satisfactory, particularly in the production of lenses with larger size and of lenses of lower quality of the surface. This common method is too laborious for the production of small-sized lenses, and lenses made in this way have some shortcomings which become particularly apparent, for example, in intraocular applications. It has been found that intraocular lenses made in this way are the more liable to a surface growth of deposits and cells the more even submicroscopic traces remain on their surface after grinding and polishing. If these lenses are made of polymers, for example, poly(methyl methacrylate), monomer is formed during polishing as the result of a high local overheating of the surface which diffuses under the polished surface. The monomer very slowly diffuses outside after application of these lenses in the eye chamber and may cause undesirable physiological reactions due to its toxicity.

It is the object of the invention to provide biconvex lenses made of synthetic, three-dimensional polymers and having a high surface quality, an economical and easy method for their production, and their use.

The above object is achieved according to the claims. The dependent claims relate to preferred embodiments.

The biconvex lenses according to the present invention are made of a synthetic polymer and are characterized in that they have the shape of a drop of a lighter liquid having a lower density which freely rests on the surface of a heavier liquid having a higher density than the lighter liquid and being immiscible therewith, while the surface tension of the heavier liquid saturated with the lighter liquid in air is smaller than the sum of the surface tension of the lighter liquid saturated with the heavier liquid in air and the surface tension at the interface of both liquids being in mutual equilibrium.

These lenses may be obtained by the method according to the present invention by polymerization of a polymerizable liquid, and particularly by

(I) applying a drop of a polymerizable lighter liquid having a lower density and consisting of or comprising at least one polymerizable monomer and a polymerization initiator on the surface of a heavier liquid having a higher density than the lighter liquid and being immiscible therewith, while the surface tension of the heavier liquid saturated with the lighter liquid in air is smaller than the sum of the surface tension of the lighter liquid saturated with the heavier liquid in air and the surface tension at the interface of both liquids in mutual equilibrium,
and

(II) polymerizing the monomer(s) of the lighter liquid.

According to the invention, preferably monofunctional and/or multifunctional olefinic and particularly vinylic monomers are used as polymerizable monomers and cross-linking agents, respectively.

The polymerizable lighter liquid advantageously consists of or comprises at least one acrylate and/or methacrylate of a monohydroxy compound and/or a polyhydroxy compound, preferably aliphatic hydroxy compounds containing at least two hydroxy groups in the molecule.

Accordingly, the lenses of this invention may be made of any kind of homopolymers or copolymers, and preferably physiologically indifferent polymers.

The lighter liquid may comprise an inert solvent.

According to a preferred embodiment of the present invention, concentrated aqueous salt solutions are used as heavier liquids, preferably solution of sodium chloride, potassium carbonate and/or sodium dihydrogenphosphate.

The shape of these lenses is almost exactly bispherical. The lenses according to the invention have an absolutely clean smooth surface and may be produced at much lower cost as compared with the mechanical working mentioned above.

Concentrated aqueous solutions of salts, which do not form soluble complexes with the monomers present in the lighter liquid, are advantageously used as heavier liquid. Such salts are particularly sodium, potassium, and ammonium salts, the concentrated solutions of which are immiscible even with extremely hydrophilic monomers, as is, for example, diethylene glycol monomethacrylate.

Preferably, the lighter liquid comprises a monomer mixture that contains multifunctional monomers able to form three-dimensional structures; in extreme cases, only multifunctional monomers can be used which give glassy hard lenses (for example, by polymerization of only ethylene dimethacrylate). If elastic lenses are to be prepared, it is necessary to use a monomer mixture wherein monofunctional monomers are prevailing, with only a small addition of multifunctional monomers, for example, 0,1 to 2 mass-%.

Furthermore, it is advantageous for some applications, for example, for making intraocular lenses, to prepare lenses from a hydrophilic gel strongly swelling with water, which results, for example, from mixtures with methacrylic esters of monohydroxy or polyhydroxy compounds, in particular of such compounds which contain at least two hydroxyl groups in a molecule, as prevailing monomers.

Lenses made from these monomer mixtures retain the unchanged shape which had the monomer drop on the surface of the heavier liquid, because its shape is fixed, due to the growing three-dimensional polymer structure, already at very low conversions (1 to 3 %, based on the content of multifunctional monomer) and does not change with increasing conversion, because the polymerization contraction does not develop deformations in the mass up to complete conversion when the polymerizing lens is freely suspended on the liquid support and thus no internal stress occurs therein.

Both surfaces of the drop differ from spherical surfaces due to gravity force the more the larger is the mass of the drop, and, consequently, its overall diameter. However, if lenses with a diameter of only about 4 to 6 mm are concerned, this deviation is very small and affects the optics of such lenses to a much lesser extent than is, for example, admitted as maximum deviation in the optics of intraocular lenses.

The radius of the upper surface, $R_a$, and the radius of the lower surface, $R_b$, of the drop or lens can be estimated for these small lenses with the proviso that the surfaces are spherical. As follows from the drawing, where a lens according to the invention is shown in axial section, these radii of the surface are $R_a = D/2 \sin A$, and $R_b = D/2 \sin B$, where D is the diameter of the lens 1, and A and B are the peripheral angles A and B representing the slope of the spherical surfaces in the place of their contact (rim angles).

The volume V of the lens is then the sum of the two spherical caps 2 and 3:

$$V = R_a^3 (1 - \cos A)^2 \cdot \left(\frac{2}{3} + \frac{\cos A}{3}\right) + R_b^3 (1 - \cos B)^2 \cdot \left(\frac{2}{3} + \frac{\cos B}{3}\right).$$

In this way the dependence of the dosed drop volume on the diameter of the resulting lens 1 can be preliminarily calculated.

For a given combination of lens and monomer mixture, the angles A and B are only little dependent on the amount of dosed drop volume, and all shape parameters of the resulting lens are then predetermined by the drop dosage. Thus, for example, with a heavier liquid of a saturated solution of potassium carbonate in water and a monomer mixture consisti.ng of 2 -hydroxyethyl methacrylate (HEMA) with 0.5 mass-% of ethylene dimethacrylate added as a crosslinking agent, and 0.5 mass-% of benzoin ethyl ether as a photoinitiator, the shape of the lens is determined by the surface tensions in such a way that the angle A is 18°, and the angle B is 56°.

Table 1 shows which volume V of the above monomer mixture of HEMA has to be dropped on the heavier liquid made from a saturated solution of potassium carbonate, in order to form a lens with a total diameter D, a radius $R_a$ of the upper surface, a radius $R_b$ of the lower surface, and a central thickness T. Its power of refraction in air is $F_x$ in the dry (xerogel) state. However, after swelling in physiological saline, which increases its dimensions linearly by the factor 1.2 and reduces the original refractive index of xerogel $n_x = 1.51$ to the refractive index of swollen gel $n_g = 1.43$, the power of refraction the swollen lens immersed in physiological saline $F_g$, is decreased:

Table 1

| A = 18° | B = 55° | | $n_x$ = 1.51 | $n_g$ = 1.43 | | |
|---|---|---|---|---|---|---|
| D (mm) | $R_a$ (mm) | $R_b$ (mm) | T (mm) | V ($\mu$l) | $F_x$ (dpt) | $F_g$ (dpt) |
| 4 | 6.5 | 2.4 | 1.4 | 9.1 | 273 | 41 |
| 4.5 | 7.3 | 2.7 | 1.5 | 13 | 243 | 36.4 |
| 5 | 8.1 | 3.1 | 1.7 | 17.9 | 218 | 32.8 |
| 5.5 | 8.9 | 3.4 | 1.9 | 23.8 | 198 | 29.8 |
| 6 | 9.7 | 3.7 | 2 | 30.8 | 182 | 27.3 |
| 6.5 | 10.5 | 4 | 2.2 | 39.2 | 168 | 25.2 |
| 7 | 11.3 | 4.3 | 2.4 | 49 | 156 | 23.4 |
| 7.5 | 12.1 | 4.6 | 2.5 | 60.2 | 146 | 21.9 |
| 8 | 12.9 | 4.9 | 2.7 | 73.1 | 136 | 20.5 |
| 8.5 | 13.8 | 5.2 | 2.9 | 87.7 | 128 | 19.3. |

If a saturated solution of sodium dihydrogenphosphate with addition of 0.1 mass-% of sodium nitrite is used as heavier liquid for the same monomer mixture, the angles at the lens edge are changed, with respect to the changed surface tensions on the three interfaces, in such a way that A = 5°, and B = 40°, thus changing also other values of the lens as follows from Table 2, where $n_x$ is the refractive index of the xerogel in air, and $n_g$ is the refractive index of the gel swollen in physiological saline:

Table 2

| A = 5° | B = 40° | | $n_x$ = 1.51 | $n_g$ = 1.43 | | |
|---|---|---|---|---|---|---|
| D (mm) | $R_a$ (mm) | $R_b$ (mm) | T (mm) | V ($\mu$l) | $F_x$ (dpt) | $F_g$ (dpt) |
| 4 | 22.9 | 3.1 | 0.8 | 5.3 | 184 | 26.3 |
| 4.5 | 25.8 | 3.5 | 0.9 | 7.6 | 164 | 23.4 |
| 5 | 28.7 | 3.9 | 1 | 10.4 | 147 | 21 |
| 5.5 | 31.6 | 4.3 | 1.1 | 13.8 | 134 | 19.1 |
| 6 | 34.4 | 4.7 | 1.2 | 18 | 123 | 17.5 |
| 6.5 | 37.3 | 5.1 | 1.3 | 22.8 | 113 | 16.2 |
| 7 | 40.2 | 5.4 | 1.4 | 28.5 | 105 | 15 |
| 7.5 | 43 | 5.8 | 1.5 | 35.1 | 98 | 14 |
| 8 | 45.9 | 6.2 | 1.6 | 42.6 | 92 | 13.1 |
| 8.5 | 48.8 | 6.6 | 1.7 | 51.1 | 87 | 12.4. |

Some heavier liquids dissolve a certain amount of monomers present in the lighter phase, which is as such immiscible with the heavier liquid. This could cause precipitation polymerization of this small amount of monomer inside the heavier liquid, and the particles of precipitating polymer may then settle on the lens surface and deteriorate the cleanness and evenness of this surface. This can be safely avoided according to the invention by dissolving advantageously 0.1 to 1 mass-% of a polymerization inhibitor in the heavier liquid, which is distributed between the phases of the heavier and the lighter liquid in such a way that it most predominantly remains in the base. If aqueous solutions of a salt are used as the heavier liquid, a salt which is water-soluble and also has an inhibition effect can be used as the inhibiting component of the heavier liquid, for example, sodium nitrite, ammonium picrate, potassium p-nitrobenzenesulfo nate, potassium bromide or iodide, sodium thiosulfate, and the like.

If the monomer mixture contains volatile monomers or volatile solvents, irregularities in the shape of cast lenses and inhomogeneities in the lens composition may occur due to evaporation during polymerization. This undesirable phenomenon may be prevented by bringing the gas phase under which the polymerization is carried out, which preferably is a protective gas, into equilibrium with monomer or monomer mixture, thus creating in the gas phase the same partial pressures of volatile components as are above the monomer mixture in equilibrium under polymerization conditions. In most cases, it is sufficient to

4

place a porous material soaked with inhibited monomer or monomer mixture near the heavier liquid with a drop of the respective monomer or monomer mixture of the lighter liquid.

In order to perfectly remove low-molecular weight impurities (residual monomer, residues of catalyst, etc.) it is possible to swell the lenses strongly with a volatile swelling agent and then extract with this agent, advantageously at boiling temperature, all impurities from the loosened structure of the swollen gel. Finally, the swelling agent is allowed to evaporate, whereby the original shape of the gel is regenerated.

The most important application of lenses according to this invention is their use as intracameral lenses for the recovery of seeing capacitiy after cataract operation. Of course, the periphery of the lenses has to be adapted for this purpose by appending supporting elements for centration the lenses in the eye by known mechanical means employed for lenses produced by mechanical processing.

Substantial advantages of lenses made in this way in comparison with conventionally produced lenses are, in addition to the high quality of their surface, mainly the considerably lower production cost, and the virtually negligible price of the production equipment.

## Claims

1. Biconvex lenses made of a synthetic polymer,
**characterized** in that
they have the shape of a drop of a lighter liquid having a lower density which freely rests on the surface of a heavier liquid having a higher density than the lighter liquid and being immiscible therewith, while the surface tension of the heavier liquid saturated with the lighter liquid in air is smaller than the sum of the surface tension of the lighter liquid saturated with the heavier liquid in air and the surface tension at the interface of both liquids being in mutual equilibrium.

2. Lenses according to claim 1, obtainable by
(I) applying a drop of a polymerizable lighter liquid having a lower density and consisting of or comprising at least one polymerizable monomer and a polymerization initiator on the surface of a heavier liquid having a higher density than the lighter liquid and being immiscible therewith, while the surface tension of the heavier liquid saturated with the lighter liquid in air is smaller than the sum of the surface tension of the lighter liquid saturated with the heavier liquid in air and the surface tension at the interface of both liquids in mutual equilibrium,
and
(II) polymerizing the monomer(s) of the lighter liquid.

3. Lenses according to claim 1 or 2, obtainable by using monofunctional and/or multifunctional olefinic and particularly vinylic monomers as polymerizable monomers.

4. Lenses according to one of claims 1 to 3, obtainable by using a lighter liquid consisting of or comprising at least one acrylate and/or methacrylate of a monohydroxy compound and/or a polyhydroxy compound, preferably aliphatic hydroxy compounds containing at least two hydroxy groups in the molecule.

5. Method for producing the lenses according to one of claims 1 to 4 by polymerization of a polymerizable liquid,
characterized by
(I) applying a drop of a polymerizable lighter liquid having a lower density and consisting of or comprising at least one polymerizable monomer and a polymerization initiator on the surface of a heavier liquid having a higher density than the lighter liquid and being immiscible therewith, while the surface tension of the heavier liquid saturated with the lighter liquid in air is smaller than the sum of the surface tension of the lighter liquid saturated with the heavier liquid in air and the surface tension at the interface of both liquids in mutual equilibrium,
and
(II) polymerizing the monomer(s) of the lighter liquid.

6. Method according to claim 5, characterized in that monofunctional and/or multifunctional olefinic and preferably vinylic monomers are used as polymerizable monomers.

7. Method according to claim 5 or 6, characterized in that at least one acrylate and/or at least one methacrylate are used as polymerizable monomers.

8. Method according to one of claims 5 to 7, characterized in that at least one acrylate and/or at least one methacrylate of a monohydroxy compound and/or a polyhydroxy compound, preferably of an aliphatic hydroxy compound containing at least two hydroxy groups in the molecule, are used as polymerizable monomers.

9. Method according to one of claims 5 to 8, characterized in that a lighter liquid is used which contains 0.1 to 2 mass-% of a multifunctional monomer, based on the total monomer content.

10. Method according to one of claims 5 to 9, characterized in that a lighter liquid comprising an inert solvent is used.

11. Method according to one of claims 5 to 10, characterized in that a heavier liquid is used comprising a polymerization inhibitor which is distributed between the lighter and the heavier liquid such that it predominantly is present in the heavier liquid, preferably sodium nitrite, ammonium picrate, potassium p-nitrobenzene-sulfonate, potassium bromide, potassium iodide and/or sodium thiosulfate.

12. Method according to one of claims 5 to 11, characterized in that concentrated aqueous salt solutions are used as havier liquids, preferably solutions of sodium, potassium, and ammonium salts, such as sodium chloride, potassium carbonate and/or sodium dihydrogenphosphate.

13. Use of the biconvex lenses according to one of claims 1 to 4 for contact lenses and intraocular lenses.